Europäisches Patentamt

European Patent Office

Office européen des brevets

(19)

(11) Numéro de publication : **0 083 533
B1**

# (12) FASCICULE DE BREVET EUROPÉEN

(45) Date de publication du fascicule du brevet :
**07.05.86**

(21) Numéro de dépôt : **82402369.1**

(22) Date de dépôt : **23.12.82**

(51) Int. Cl.⁴ : **H 02 M 3/335, H 04 N 3/18**

(54) **Dispositif d'alimentation régulée à découpage, notamment pour appareil de visualisation, et appareil le comportant.**

(30) Priorité : **31.12.81 FR 8124571**

(43) Date de publication de la demande :
**13.07.83 Bulletin 83/28**

(45) Mention de la délivrance du brevet :
**07.05.86 Bulletin 86/19**

(84) Etats contractants désignés :
**BE DE GB**

(56) Documents cités :
**US-A- 4 079 418
US-A- 4 188 641
US-A- 4 240 012**

(73) Titulaire : **SOCIETE ELECTRONIQUE DE LA REGION PAYS DE LOIRE**
**74, rue du Surmelin**
**F-75020 Paris (FR)**

(72) Inventeur : **Soulard, Patrice**
**THOMSON-CSF SCPI 173, bld Haussmann**
**F-75379 Paris Cedex 08 (FR)**

(74) Mandataire : **Turlèque, Clotilde et al**
**THOMSON-CSF SCPI 19, avenue de Messine**
**F-75008 Paris (FR)**

EP 0 083 533 B1

## Description

L'invention concerne un dispositif d'alimentation à découpage (dit « switching regulator power supply » en anglais) ou convertisseur statique continu-continu avec régulation de sa ou ses tensions de sortie et avec isolement de ses sorties par rapport au réseau alternatif qui l'alimente par l'intermédiaire d'un montage redresseur.

Le dispositif d'alimentation à découpage de la présente invention est notamment destiné à alimenter un appareil de visualisation ou d'affichage d'informations sur l'écran luminescent d'un tube à rayons cathodiques dont la déviation électromagnétique est effectuée à l'aide de deux paires de bobines de déviation engendrant respectivement des champs magnétiques orthogonaux, proportionnels aux courants qui les parcourent. Ces courants de déviation respectivement horizontale et verticale sont engendrés à l'aide de circuits de balayage de ligne et de trame classiques, de types couramment utilisés dans les récepteurs ou moniteurs de télévision. Pour éviter la formation d'images parasites ou de perturbations visibles, mobiles sur l'écran, il est indispensable de synchroniser le fonctionnement du circuit de découpage avec celui du circuit de balayage de ligne, ce qui est bien connu et décrit, ainsi que la régulation, notamment dans deux articles G. Van Schaik intitulés « An introduction to switched-mode power supplies in TV receivers » et « control circuits for SMPS in TV receivers » respectivement parus aux pages 181 à 195 du n° 135 et aux pages 210 à 226 du n° 136, des mois de juillet et d'octobre 1977, de la revue britannique « Mullard technical communications ». Le signal nécessaire à la synchronisation du circuit de découpage avec le circuit de balayage-ligne doit être transmis de manière isolée par rapport à ce dernier, soit au moyen d'un transformateur d'impulsions et d'isolement supplémentaire, soit au moyen d'un enroulement secondaire supplémentaire obtenu au moyen d'une ou de quelques spires de fil à haut isolement enroulées autour d'une jambe du noyau magnétique du transformateur de sortie ligne dont l'enroulement primaire est inséré entre l'une des bornes de sortie du dispositif d'alimentation et la borne d'alimentation de l'étage de sortie du circuit de balayage-ligne. Cet enroulement secondaire supplémentaire est réuni par l'une de ses bornes au potentiel de référence du circuit de découpage.

La régulation de la ou des tensions continues que fournit le dispositif d'alimentation à découpage est effectuée ici de manière classique, par la variation du rapport cyclique, c'est-à-dire du rapport entre l'intervalle de temps au cours duquel le transistor de découpage est saturé et la durée de la période de répétition ou récurrence de son fonctionnement qui englobe deux intervalles respectivement de saturation et de blocage successifs de ce transistor, en fonction de l'une des tensions de sortie du dispositif. L'information de régulation qui varie proportionnellement à cette tension de sortie, doit également parvenir au circuit de commande du transistor de découpage, plus précisément au modulateur de la largeur d'impulsions (dit « pulse width modulator » en anglais) qu'il comporte, de manière galvaniquement isolée. Selon l'état de la technique, le transformateur d'alimentation et d'isolement dont l'enroulement primaire est commuté au moyen du transistor de découpage, comporte également un enroulement secondaire supplémentaire dont l'une des bornes est reliée au point du potentiel de référence du circuit de découpage, dit masse chaude ou primaire (non-isolée du réseau) et dont l'autre borne est reliée à l'anode d'une diode de redressement. La cathode de cette diode est réunie, d'une part au moyen d'un condensateur de filtrage (ou d'emmagasinage de tension) et d'autre part au moyen d'un montage diviseur potentiométrique (résistif), à cette masse chaude. Le montage diviseur fournit une fraction réglable de la tension ainsi redressée et filtrée à un amplificateur différentiel pour la comparer à une tension de référence fixe et pour fournir une tension d'erreur proportionnelle à la différence entre celle-ci et la fraction de tension précitée, à l'entrée de modulation du modulateur (PWM) susmentionné.

La transmission galvaniquement isolée des informations de régulation et de synchronisation est assurée, selon l'état de la technique susmentionné, au moyen de deux enroulements secondaires supplémentaires respectivement bobinés sur les noyaux magnétiques des transformateurs d'alimentation et de sortie de ligne.

Toutefois, on obtient une meilleure précision de la régulation, si l'information s'y rapportant est prélevée entre celles des bornes de sortie du dispositif d'alimentation qui doivent fournir le courant moyen le plus fort et/ou celles dont le courant subit les plus fortes variations. Dans le cas présent, c'est la paire de bornes de sortie qui fournit la tension d'alimentation à l'étage de sortie de balayage de ligne qui remplit ces deux conditions. Une grandeur électrique (courant, tension, résistance) variable en fonction de cette tension d'alimentation devra donc être élaborée et transmise de manière galvaniquement isolée au circuit de commande du circuit de découpage. L'étage d'isolement galvanique est constitué ici par un photocoupleur du type comprenant une diode émettrice de lumière et un phototransistor qui reçoit la lumière émise par la diode et qui est rendu conducteur en fonction de l'intensité de celle-ci.

Dans la publication US-A-4 037 271 (voir préambule de la revendication 1), on a décrit un dispositif d'alimentation régulée à découpage dans lequel le circuit de découpage comprend un transformateur dont l'enroulement primaire est relié en série avec le trajet collecteur-émetteur d'un transistor de commutation de puissance et avec une faible résistance de mesure du courant émetteur de celui-ci, entre les bornes de sortie d'un montage redresseur à quatre diodes en pont, également réunies ensemble au moyen d'un condensateur de filtrage. Le transistor de puissance est commandé sur sa base, par l'intermédiaire d'un étage d'attaque du type « push-pull » complémentaire et d'un modulateur de largeur d'impulsions (utilisant un circuit intégré du type 555). Ce modulateur comprend un condensateur chargé à travers une résistance fixe par une tension qui est fonction de celle du réseau et déchargé à travers une résistance variable comprenant un transistor PNP dont le circuit de polarisation comporte un phototransistor NPN réuni par son collecteur à la base de celui-ci et par son émetteur, à la masse primaire ou chaude.

La surface (base) photosensible du phototransistor est optiquement couplée à une diode émettrice de lumière, de manière à constituer un photocoupleur couramment disponible, qui est insérée dans le circuit de sortie d'un amplificateur opérationnel dont l'entrée inverseuse est galvaniquement reliée (par l'intermédiaire d'un diviseur fixe) à l'un des montages redresseurs alimentés par l'enroulement secondaire et dont l'autre entrée (non-inverseuse) reçoit une tension de référence fixe. L'amplificateur opérationnel constitue donc un détecteur d'une tension d'erreur qui est appliquée à la diode émettrice de lumière de telle sorte que l'intensité de la lumière qu'elle émet fasse varier la résistance du trajet collecteur-émetteur du phototransistor qui polarise le transistor PNP à travers le trajet émetteur-collecteur duquel se décharge le condensateur. La variation de la tension d'erreur est donc transformée en une variation d'énergie lumineuse qui est à son tour transformée en une résistance variable insérée dans un montage diviseur potentiométrique qui restitue une variation de tension transmise avec isolement galvanique.

Dans la publication US-A-4 037 271 précitée, le photocoupleur est utilisé en mode linéaire pour transmettre l'information de régulation de manière galvaniquement isolée, de la partie aval du dispositif d'alimentation dont le point au potentiel de référence (masse froide) est isolée du réseau, vers sa partie amont comprenant le circuit de découpage et le circuit de régulation et de commande, notamment, dont le point au potentiel de référence (masse chaude) est relié ou réuni au réseau par l'intermédiaire du montage redresseur (en pont).

Un photocoupleur peut également être utilisé en mode commuté, c'est-à-dire comme interrupteur électronique. Lorsque sa photodiode est alimentée en impulsions, son phototransistor est alternativement saturé ou bloqué et il peut être utilisé pour transmettre des signaux binaires de manière isolée. Un exemple d'une telle utilisation a été proposé dans la publication DE-A-27 13 310 pour la transmission des impulsions de commande à l'étage d'attaque (« driver » en anglais) d'un transistor de commutation de puissance.

Il ressort des considérations qui précèdent, que lorsque l'on utilise un photocoupleur pour la transmission de l'information de régulation avec isolement galvanique, celle de synchronisation peut être transmise soit par un transformateur d'isolement distinct, soit par un enroulement secondaire supplémentaire à haut isolement du transformateur de sortie-ligne, soit par un autre photocoupleur fonctionnant en mode commuté.

La présente invention permet d'éviter l'utilisation du câble à haut isolement, du transformateur d'impulsions ou du photocoupleur supplémentaires et de réaliser une économie de moyens tout en réduisant les risques d'interférence électromagnétique par rayonnement, notamment.

L'invention a pour objet un dispositif d'alimentation régulée à découpage dont les sorties fournissant des tensions continues d'alimentation sont galvaniquement isolées du réseau alternatif qui l'alimente par l'intermédiaire d'un premier montage redresseur, au moyen d'un transformateur d'isolement et d'alimentation dont l'enroulement primaire est réuni en série avec le trajet collecteur-émetteur d'un transistor de découpage entre les bornes de sortie de ce dernier, la base du transistor de découpage étant couplée à la sortie d'un circuit de régulation et de commande qui lui fournit des signaux rectangulaires à rapport cyclique variable en fonction d'une information de régulation fournie par l'une des sorties isolées et transmise au moyen d'un photocoupleur à l'entrée de régulation du circuit de régulation et de commande, à l'entrée de synchronisation duquel est également transmise de manière galvaniquement isolée une information de synchronisation provenant d'un circuit à fonctionnement périodique, tel qu'un circuit de balayage horizontal, alimenté par l'une des sorties du dispositif.

Suivant l'invention, l'information de synchronisation est superposée sans composante continue à celle de régulation en amont du photocoupleur et elle en est séparée en aval de celui-ci, à l'aide d'un filtre passe-haut et d'un filtre passe-bas qui alimentent respectivement les entrées de synchronisation et de régulation du circuit de régulation et de commande.

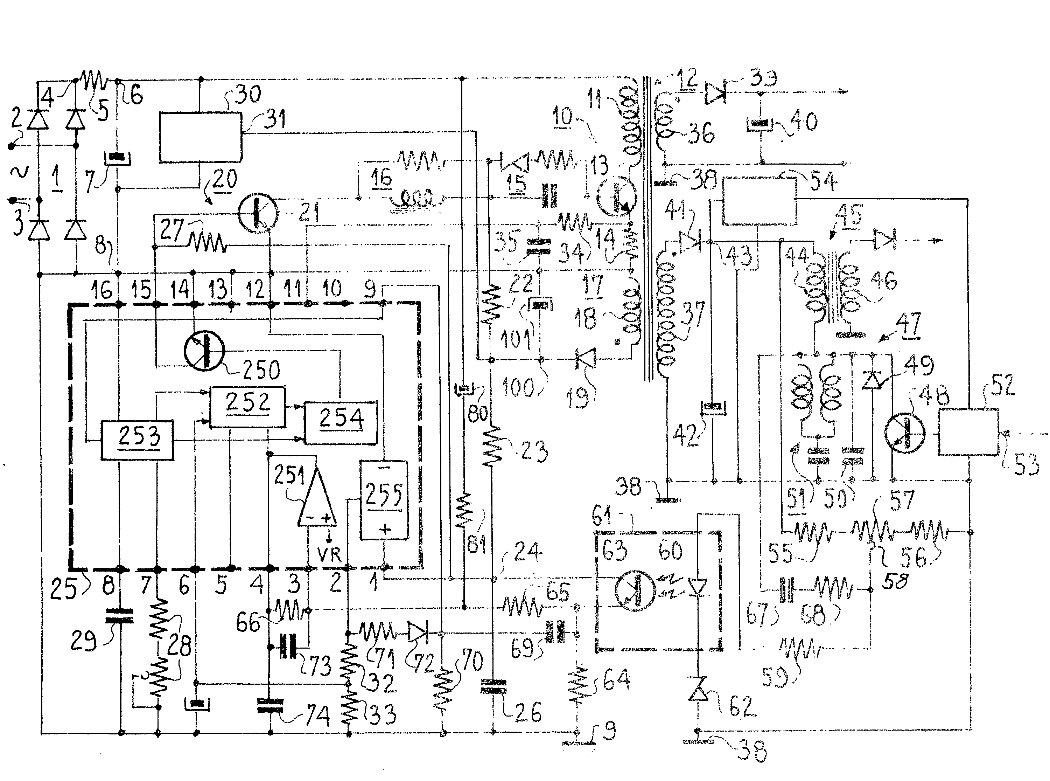

L'invention sera mieux comprise et d'autres de ses objets, caractéristiques et avantages apparaîtront à la lecture de la description qui suit et du dessin annexé s'y rapportant, donnés à titre d'exemple, dont la figure unique représente schématiquement un dispositif d'alimentation régulée à découpage, suivant l'invention.

Sur la figure unique, on a représenté par le repère 1, un pont redresseur composé de quatre diodes, dont les bornes d'entrée 2 et 3 sont alimentées par le réseau alternatif de distribution (220 V$_{eff}$, 50 Hz). La borne de sortie positive 4 du pont 1 est reliée par l'intermédiaire d'une résistance de faible valeur 5 (quelques ohms) à l'armature positive 6 d'un condensateur de filtrage 7 dont l'armature négative 8 est reliée à la borne de sortie négative du pont 1 et à la masse, dite primaire ou chaude, 9 qui constitue le point du potentiel de référence pour le circuit de découpage 10, le circuit de régulation et de commande 20 et le circuit d'alimentation 30 provisoire de ce dernier pendant le démarrage du dispositif. Cette masse chaude 9 est alternativement galvaniquement réunie aux deux bornes d'entrée 2, 3 par l'intermédiaire respectif de deux diodes du pont 1.

Le circuit de découpage 10 comprend une inductance de commutation qui est constituée par l'enroulement primaire 11 du transformateur d'isolement et d'alimentation 12, un transistor de commutation haute-tension 13 de type NPN et une résistance de protection 14 de faible valeur (inférieure à un ohm), qui sont reliées en série entre la borne positive 6 du premier montage redresseur comprenant le pont 1 et le condensateur 7, et sa borne négative 8 reliée à la masse chaude 9.

La résistance de protection 14 est parcourue, pendant l'intervalle de saturation du transistor de commutation ou de découpage 13, par le courant émetteur de celui-ci, qui du fait de la charge inductive dans son circuit collecteur, est sensiblement linéairement croissant. La chute de tension linéairement croissante que ce courant engendre, est utilisée dans le circuit de régulation et de commande 20 pour assurer une limitation de la valeur crête du courant émetteur de ce transistor 13, de manière connue.

La base du transistor 13 est réunie, par l'intermédiaire d'un premier montage parallèle 15 formant pile et d'un second montage parallèle 16 en série, au collecteur d'un second transistor de commutation 21 de type NPN, dont l'émetteur est relié à la masse chaude 9. Le premier montage 15 comprend une diode Zener et une résistance montées en série avec un condensateur connecté en parallèle et le second montage 16 constitue un circuit de protection classique contre des taux de montée de courant excessifs, composé d'une inductance et d'une résistance connectées en parallèle. L'alimentation du circuit de commande et de régulation 20, ainsi que la polarisation de la base du transistor de découpage 13 pendant son état saturé, est assurée, au cours du fonctionnement normal après démarrage, au moyen d'un circuit d'auto-alimentation 17 comprenant un enroulement secondaire 18 du transformateur 12, dont une borne est reliée à la masse chaude 9 et dont l'autre borne est reliée à l'anode d'une diode de redressement 19. La cathode de cette diode 19 est reliée à l'armature positive 100 d'un condensateur électrochimique 101 dont l'armature négative est reliée à la masse chaude 9. La borne 100 est également reliée à la sortie 31 du circuit d'alimentation provisoire 30 qui assure l'alimentation du circuit de régulation et de commande 20 au cours du démarrage à la mise sous tension et, éventuellement, de façon intermittente en cas de panne.

Cette borne 100 fournissant une tension continue positive est réunie à la jonction entre les deux montages parallèles 15 et 16 au moyen d'une résistance 22 qui constitue simultanément la résistance de polarisation de la base du transistor de découpage 13 et la résistance collecteur du second transistor 21 dont la saturation commande le blocage ultérieur du premier 13 et dont le blocage permet la mise en saturation de celui-ci.

Cette borne 100 est reliée, en outre, à l'une des bornes d'une autre résistance 23 dont l'autre borne 24 est reliée à la broche d'alimentation positive (1) d'un circuit régulateur par la variation du rapport cyclique 25 formant l'essentiel du circuit de régulation et de commande 20 et constitué ici par un circuit intégré (hybride) du type TDA 1060 commercialisé, notamment, par la société française dite « La radiotechnique ». La composition interne ainsi que le brochage de ce circuit intégré connu a été partiellement représenté de façon synoptique, afin de faciliter l'explication du fonctionnement du dispositif d'alimentation à découpage.

La borne 24 est, en outre, réunie à la masse chaude 9 par un condensateur de découplage 26, ainsi qu'à la base du second transistor 21 au moyen d'une résistance de polarisation 27. La base du second transistor 21 est également reliée à la broche de sortie négative (15) du circuit intégré 25 qui est reliée, à l'intérieur de ce circuit, au collecteur d'un transistor de sortie NPN 250 dont l'émetteur est relié, par l'intermédiaire de sa broche de sortie positive (14), à la masse chaude 9. On peut voir aisément que la saturation du transistor de sortie 250 du circuit provoque le blocage du second transistor 21 qui à son tour provoque la mise en saturation du transistor de découpage 13.

L'information de régulation sous la forme d'une tension continue qui varie proportionnellement à l'une des tensions de sortie du dispositif est appliquée ici, par l'intermédiaire de l'entrée de régulation constituée par la broche (3), à l'entrée inverseuse (—) d'un amplificateur d'erreur 251 dont l'entrée non inverseuse (+) reçoit une tension de référence fixe VR, élaborée à l'intérieur du circuit 25. La sortie de cet amplificateur 251 est reliée, d'une part, à l'entrée de modulation du modulateur de largeur d'impulsion 252 et d'autre part, à la broche (4) pour permettre d'ajuster le gain de l'amplificateur 251 au moyen d'un circuit de contre-réaction extérieur. Une autre entrée du modulateur 252 est alimentée par l'une des sorties d'un générateur de dents de scie récurrentes 253 dont la fréquence (et la pente) est déterminée au moyen d'une résistance 28 et d'un condensateur 29 extérieurs, réunissant respectivement les broches (7) et (8) du circuit intégré 25 à la masse chaude 9. Le générateur de dents de scie 253 qui oscille de façon autonome, est synchronisable et il comporte à cette fin une entrée de synchronisation reliée à la broche (9). La fréquence d'oscillation autonome du générateur 253 doit être supérieure à la fréquence du signal de synchronisation impulsionnel appliqué à la broche (9).

Le modulateur de largeur d'impulsion 252 compare, notamment, la tension de sortie de l'amplificateur d'erreur 251 à la tension en dents de scie provenant du générateur 253 et fournit un signal rectangulaire à rapport cyclique variable en fonction de la tension d'erreur. Une tension continue appliquée sur une autre entrée du modulateur 252 reliée à la broche (6), au moyen d'un diviseur de tension résistif 32-33 connecté entre la broche (2) fournissant une tension engendrée à l'intérieur du circuit, et la masse chaude 9, permet de limiter la valeur maximale du rapport cyclique (par exemple, à 0,5 ou moins), si c'est nécessaire.

Le circuit intégré 25 comporte, en outre, une alimentation régulée intérieure 255 et divers circuits de protection, de démarrage progressif et d'arrêt temporaire en cas de panne (non représentés), dont l'un est alimenté à travers la broche (11) par la tension présente à la jonction de l'émetteur du transistor de découpage 13 avec la résistance 14, par l'intermédiaire d'un filtre passe-bas 34-35, afin de limiter le courant collecteur maximal du transistor de découpage 13.

La base du transistor de sortie 250 est reliée à la sortie d'un circuit de commande 254 comprenant deux entrées respectivement reliées au générateur de dents de scie 253 et au modulateur 252. Ce circuit de commande comprend un basculeur bistable du type « RS » dont l'entrée de remise à un $\bar{S}$ reçoit les dents de scie du générateur 253 et dont l'entrée de remise à zéro $\bar{R}$ reçoit le signal rectangulaire provenant du modulateur 252 (à travers une porte logique).

Le transformateur d'alimentation 12 a été représenté avec deux autres enroulements secondaires 36 et 37 dont chacun est relié par l'une de ses bornes à une masse, dite secondaire ou froide, 38, galvaniquement isolée du réseau, qui fournit le potentiel de référence au reste de l'appareil de visualisation.

Le premier 36 de ces autres enroulements secondaires alimente un autre montage redresseur comprenant un diode de redressement 39 et un condensateur de filtrage 40 entre les armatures duquel on prélève une première tension continue d'alimentation.

Le second 37 des autres enroulements secondaires est relié par son autre borne à l'anode d'une autre diode de redressement 41 dont la cathode est reliée à l'armature positive 43 d'un autre condensateur de filtrage 42, son armature négative étant reliée à la masse froide 38. Cette armature positive 43 qui constitue la borne de sortie positive du dernier montage redresseur 41-42, est reliée à travers l'enroulement primaire 44 du transformateur de sortie du balayage horizontal 45 dont un enroulement secondaire 46 est généralement destiné à fournir des très hautes tensions au tube à rayons cathodiques (non représenté), à l'étage de sortie du balayage horizontal 47 classique. Cet étage de sortie 47 comprend un transistor de commutation NPN 48, une diode de récupération « shunt » 49 et un condensateur de retour 50 respectivement connectés en parallèle avec un montage 51 composé des bobines de déviation horizontale connectées en parallèle et d'un condensateur dit « aller » ou « d'effet S » connecté en série.

Le transistor de balayage 48 est commandé sur sa base au moyen d'un circuit 52 composé d'un oscillateur-ligne, d'un circuit de synchronisation de celui-ci avec un signal appliqué à l'entrée 53 et d'un étage d'attaque (appelé « driver » en anglais), qui est alimenté par la borne 43 à travers un régulateur de tension 54.

La charge qui consomme le plus de courant et en même temps celle dont le courant subit les variations les plus importantes, est l'étage de sortie du balayage horizontal 47. Il convient donc de prélever l'information de régulation entre les armatures du condensateur 42 et de la transmettre de manière galvaniquement isolée à l'entrée de régulation (broche 3) du circuit intégré 25. A cette fin, un diviseur résistif composé de deux résistances fixes 55 et 56 et d'un potentiomètre 57 inséré entre celles-ci, est connecté entre la borne 43 et la masse froide 38. Le curseur 58 du potentiomètre 57 est relié à l'une des bornes d'une résistance 59 dont l'autre borne est reliée à l'anode d'une diode émettrice de lumière (ou électroluminescente) 60 constituant l'élément d'entrée d'un photocoupleur 61 qui permet de transformer une intensité de courant en intensité lumineuse et isoler ainsi l'entrée de la sortie. La cathode de la diode émettrice de lumière 60 est reliée à la cathode d'une diode Zener 62 dont l'anode est reliée à la masse froide 38. La tension de Zener de la diode 62 est choisie de telle sorte qu'elle soit de plusieurs volts inférieure à la tension que fournit le curseur 58 du potentiomètre 57, afin que la diode 60 fonctionne dans la plage linéaire de sa caractéristique courant-tension. La présence de cette diode Zener 62 permet, en outre, de favoriser la composante alternative de la tension de régulation correspondant à l'ondulation résiduelle et à la fluctuation de la charge par rapport à sa composante continue dont une partie est soustraite par cette diode Zener 62, car la composante alternative n'est affaiblie que par le facteur de division du diviseur 55, 56 et 57 qui peut être relativement grand (0,6-0,7).

La lumière émise par la diode 60 est transmise à la surface (base) photosensible d'un phototransistor 63 qui constitue l'élément de sortie du photocoupleur 61. Le phototransistor 63 qui est du type NPN, est relié par son collecteur à la borne 24 (découplée à la masse chaude 9). Son émetteur est relié au moyen d'une résistance 64 à la masse chaude 9. Il est donc monté en collecteur commun et son courant émetteur qui varie sensiblement proportionnellement à l'intensité de la lumière incidente, provoque aux bornes de cette résistance émetteur 64 une chute de tension qui fait varier la tension émetteur du phototransistor 63 en phase avec la tension sur le curseur 58 du potentiomètre 57. L'émetteur du phototransistor 63 est réuni au moyen d'une résistance 65 à l'entrée de régulation (broche 3) du circuit intégré 25. Cette entrée de régulation étant reliée à l'entrée inverseuse (—) de l'amplificateur d'erreur 251, une résistance de contre-réaction 66 qui la réunit à la sortie (broche 4) de cet amplificateur 251, permet d'ajuster le gain de celui-ci (ainsi que celui de la boucle de régulation).

Suivant l'invention, au lieu d'utiliser un condensateur d'isolement ou un enroulement supplémentaire à haut isolement ajouté au transformateur de sortie du balayage horizontal 45, ou encore un transformateur d'impulsions supplémentaire dont le primaire est relié entre un point du circuit de synchronisation et de commande du balayage horizontal 52 et la masse froide 38, par exemple, l'information de synchronisation est superposée à l'information de régulation en amont de son application au photocoupleur 61. Elle en est séparée en aval de celui-ci et appliquée, par l'intermédiaire de la broche (9) du circuit intégré 25, à l'entrée de synchronisation du générateur de dents de scie 253.

On utilisera de préférence ici le signal présent à la jonction entre l'enroulement primaire 44 du transformateur de sortie du balayage horizontal 45 et l'étage de sortie du balayage-ligne 47, c'est-à-dire sur le collecteur du transistor de balayage 48, qui comprend des impulsions de tension positives sensiblement de forme demi-sinusoïdale au cours des intervalles de retour-ligne, appelées impulsions de retour-ligne, et des plateaux de tension d'abord de niveau légèrement négatif (—$V_{FD}$ de 0,7 V environ) et ensuite légèrement positif ($V_{CEsat}$), proches de zéro, entre deux impulsions de retour-ligne successives. La valeur moyenne de cette forme d'onde de tension récurrente est sensiblement égale à la tension de sortie $V_{43}$ du montage redresseur 41-42, si l'on fait abstraction de la correction de coussin Est-Ouest (non représenté) qui lui fait subir une modulation d'amplitude à la fréquence du balayage vertical.

Pour obtenir une information de synchronisation pure, on est donc amené à éliminer la composante continue, c'est-à-dire la valeur moyenne, du signal disponible sur le collecteur du transistor de balayage 48, au moyen d'un premier filtre passe-haut (dont la fréquence de coupure inférieure peut être située aux alentours de 15 kHz et dont la supérieure, s'il y en a, doit être supérieure à 50 kHz environ, pour laisser passer les demi-sinusoïdes). Le premier filtre passe-haut est constitué dans sa réalisation la plus simple par un condensateur 67 dont une armature est réunie au collecteur du transistor de balayage 48 et dont l'autre armature est reliée au moyen d'une résistance 68 dont la valeur est choisie de façon à adapter l'amplitude crête-à-crête des impulsions de retour-ligne, au curseur 58 du potentiomètre 57. La résistance 68 constitue avec la partie inférieure du potentiomètre 57 et la résistance 56, un diviseur résistif pour l'impulsion de retour-ligne sans composante continue. Celle-ci comprend alors une alternance positive demi-sinusoïdale et une alternance négative en forme de plateau. Il est indispensable de veiller à ce que l'amplitude crête de cette alternance négative reste toujours inférieure à la différence entre la tension moyenne sur le curseur 58 du potentiomètre 57 et la tension Zener $V_Z$ de la diode 62 en série avec la photodiode 60, afin que son courant minimal qui se produit pendant ce plateau négatif, soit, de préférence, situé au-dessus de la limite inférieure de la plage sensiblement linéaire de sa caractéristique courant-tension. On peut également considérer les résistances 55, 56, 68 et le potentiomètre 57 comme un réseau additionneur analogique, au moyen duquel on ajoute à une tension qui est une fraction (importante) de la tension à réguler, un signal alternatif périodique. La résultante de cette addition est une forme d'onde de tension dont la valeur moyenne est égale à la tension $V_{58}$ sur le curseur 58 et dont la composante alternative est constituée par les impulsions de retour-ligne sans valeur moyenne.

Du côté sortie du photocoupleur, c'est-à-dire en aval de l'émetteur du phototransistor 63, il faut séparer la composante continue du signal qu'il fournit de sa composante alternative qui constitue l'information de synchronisation. Ceci est effectué au moyen d'un second filtre passe-haut comprenant un autre condensateur 69 dont une borne est reliée à l'émetteur du phototransistor 63 et dont l'autre borne est reliée, d'une part, à l'une des bornes d'une résistance 70 qui constitue l'autre élément du filtre passe-haut et, d'autre part, à l'entrée de synchronisation du générateur de dents de scie 253 par l'intermédiaire de la broche (9). L'autre borne de la résistance 70 est reliée à la masse chaude 9.

Il est à remarquer que cette entrée de synchronisation (broche 9) est, en outre, prépolarisée par une tension continue stabilisée $V_Z$ (8,4 V) provenant de l'alimentation interne 255 et amenée à la broche (2) qui est réunie à la broche (9) au moyen d'une résistance 71 et d'une diode 72, qui forment avec la résistance 70 un diviseur de tension résistif de manière à y appliquer une tension de 1,3 V environ, car une tension inférieure à 0,8 V interdit et une tension supérieure à 2,2 V provoque la décharge du condensateur 29 relié à la broche (8). La tension de prépolarisation peut être choisie sensiblement égale à l'amplitude de plateaux négatifs du signal transmis par le condensateur 69.

On notera également que la constante de temps $R_{70}$-$C_{69}$ du second filtre passe-haut ou différentiateur passif, peut être choisie de manière à rendre la durée de l'impulsion appliquée à l'entrée de synchronisation (broche 9) plus courte que celle de l'impulsion de retour-ligne, si c'est nécessaire pour la bonne synchronisation de générateur 253.

Pour que la régulation fonctionne correctement, il faut éliminer du signal fourni par l'émetteur du phototransistor 63 la partie de la composante alternative qui correspond aux impulsions de retour-ligne dont la fréquence fondamentale est pour la télévision, par exemple, 15,625 Hz en Europe ou 15,750 Hz aux Etats-Unis d'Amérique, mais il faut conserver la partie due à l'ondulation résiduelle du montage redresseur haute-tension dont la fondamentale pour un redresseur à deux alternances comme le pont 1, est à 100 Hz en Europe (120 Hz aux Etats-Unis). Ceci peut être obtenu au moyen d'un filtre passe-bas passif inséré entre l'émetteur du phototransistor 63 et l'entrée de régulation (broche 3) du circuit intégré 25, dont les paramètres sont calculés de façon à obtenir une fréquence de coupure supérieure de quelques centaines ou milliers de hertz.

Dans le cas présent, on profite de la disponibilité de la sortie (broche 4) de l'amplificateur opérationnel d'erreur 251 du circuit intégré 25 pour en faire un filtre passe-bas actif par l'adjonction d'un condensateur 73 de contre-réaction en parallèle avec la résistance 66 et en découplant, en outre, cette sortie (broche 4) à la masse chaude 9 au moyen d'un autre condensateur 74.

Dans un mode de réalisation de l'invention qui est avantageux notamment lorsque la fréquence du balayage verticale n'est pas synchronisée avec celle du réseau alternatif, l'addition d'une fraction de la tension d'ondulation résiduelle entre les bornes de sortie 6 et 8 du montage redresseur au moyen d'un dipôle composé d'un condensateur 80 et d'une résistance 81, à l'entrée inverseuse (—) de l'amplificateur d'erreur 251, permet d'en obtenir une compensation supplémentaire satisfaisante sur les sorties du dispositif d'alimentation. Les valeurs du condensateur 80 et de la résistance 81 qui déterminent respectivement la phase et l'amplitude du signal de compensation appliqué à l'entrée de régulation (broche 3), sont déterminées expérimentalement en mesurant l'ondulation à la fréquence double de celle du réseau (pour un redresseur à deux alternances) sur les sorties des autres montages redresseurs 39-40 et 41-42.

La Note d'Application du constructeur de ce circuit intégré TDA 1060 décrit et illustre divers types de dispositifs d'alimentation à découpage auxquels il est possible d'adjoindre le dispositif de transmission combinée des informations de régulation et de synchronisation, en conservant un parfait isolement entre le réseau et les sorties du dispositif. D'autres types de circuits de commande à composants discrets ou intégrés sont donc utilisables de manière analogue sans sortir du cadre de la présente invention.

Il est également à remarquer que le balayage de l'écran du tube à rayons cathodiques peut être différent des standards de télévision existants. Par exemple, ce balayage peut être séquentiel au lieu d'être entrelacé, que le nombre de lignes par image ou trame peut être supérieur à celui des normes de la télévision, ainsi que le nombre d'images par seconde.

L'invention n'est pas applicable uniquement à des appareils de visualisation à tube à rayons cathodiques à déviation électromagnétique, dont le circuit de balayage horizontal fonctionne à une fréquence supérieure à 10 kilohertz, mais également lorsque le dispositif d'alimentation à découpage doit fournir une tension d'alimentation régulée à un circuit générateur de puissance à fonctionnement périodique où il est avantageux de synchroniser le découpage avec ce dernier, afin d'éviter la production de battements entre deux fréquences de fonctionnement autonome.

**Revendications**

1. Dispositif d'alimentation régulée à découpage dont les sorties fournissant des tensions continues d'alimentation sont galvaniquement isolées du réseau qui l'alimente par l'intermédiaire d'un premier montage redresseur (1-7), au moyen d'un transformateur d'isolement et d'alimentation (12) dont l'enroulement primaire (11) est réuni en série avec le trajet collecteur-émetteur d'un transistor de découpage (13) entre les bornes de sortie (6, 8) de ce dernier, la base du transistor de découpage (13) étant couplée à la sortie d'un circuit de régulation et de commande (20) qui lui fournit des signaux rectangulaires à rapport cyclique variable en fonction d'une information de régulation fournie par l'une des sorties isolées (43, 38), et transmise au moyen d'un photocoupleur (61) à l'entrée de régulation du circuit de régulation et de commande (20), à l'entrée de synchronisation duquel est également transmise, de manière galvaniquement isolée, une information de synchronisation provenant d'un circuit à fonctionnement périodique, tel qu'un circuit de balayage horizontal, alimenté par l'une des sorties isolées du dispositif, caractérisé en ce que l'information de synchronisation est superposée sans composante continue à celle de régulation en amont du photocoupleur (61) et en ce qu'elle en est séparée en aval de celui-ci, à l'aide d'un filtre passe-haut (69, 70) et d'un filtre passe-bas (65, 66, 251, 73, 74) qui alimentent respectivement les entrées de synchronisation et de régulation du circuit de régulation et de commande (20).

2. Dispositif suivant la revendication 1, caractérisé en ce que, outre l'information de régulation, l'entrée de régulation reçoit également une fraction prédéterminée de la tension d'ondulation résiduelle présente entre les bornes de sortie (6, 8) du premier montage redresseur (1, 7).

3. Dispositif d'alimentation régulée à découpage avec isolement de ses sorties du réseau alternatif, pour appareil de visualisation ou d'affichage d'informations sur l'écran luminescent d'un tube à rayons cathodiques à déviation électromagnétique, comprenant un circuit de découpage (10) composé de l'enroulement primaire (11) d'un transformateur d'isolement (12) et du trajet collecteur-émetteur d'un transistor de découpage (13), réunis en série entre les bornes de sortie (6, 8) d'un premier montage redresseur (1, 7) alimenté par le réseau, le transistor (13) étant commandé sur sa base au moyen d'un circuit de régulation et de commande (20) comprenant une entrée de régulation qui reçoit une tension dont la variation affecte celle du rapport cyclique des signaux commandant la saturation et le blocage alternés du transistor de découpage (13) et une entrée de synchronisation alimentée par des impulsions prélevées sur le circuit de balayage horizontal (52, 47) pour synchroniser l'oscillateur autonome du circuit de régulation de commande (20) avec ce balayage, la tension de régulation étant prélevée entre les bornes (43, 38) de sortie d'un autre montage redresseur (41, 42) alimenté par un enroulement secondaire (37) du transformateur (12), dont l'une des bornes est reliée à une masse (38) isolée du réseau et transmise au moyen d'un photocoupleur (61) à l'entrée de régulation, caractérisé en ce que les impulsions de synchronisation sont, après passage par un filtre passe-haut ou un condensateur (67), superposées à la tension de régulation en amont du photocoupleur (61) et en ce que le signal disponible en sortie de ce dernier est séparé en deux composantes respectivement à l'aide d'un second filtre passe-haut (69, 70) pour être appliquée à l'entrée de synchronisation et d'un filtre passe-bas (66, 73) pour être appliquée à l'entrée de régulation du circuit de régulation et de commande (20).

4. Dispositif suivant la revendication 3, caractérisé en ce que le filtre passe-bas est combiné à un amplificateur opérationnel dit d'erreur (251) dont l'entrée inverseuse (—) couplée à la sortie du photocoupleur (61), est réunie à sa sortie au moyen d'un condensateur (73) afin de former un filtre actif de type passe-bas.

5. Dispositif suivant l'une des revendications 3 et 4, caractérisé en ce que le second filtre passe-haut est constitué par un simple circuit différentiateur passif comprenant un condensateur (69) et une résistance (70).

6. Dispositif suivant l'une des revendications 3 à 5, du type dans lequel la tension de régulation fournie par un diviseur résistif (55, 56, 57) connecté entre les bornes de sortie (43, 38) du second montage redresseur (41, 42), est appliquée à un circuit comprenant une résistance (59), une diode émettrice de lumière (60) constituant l'élément d'entrée du photocoupleur (61), et une diode Zener (62), connectées en série, caractérisé en ce que la différence entre la valeur moyenne de la tension de régulation et la tension Zener de la diode (62) qui polarise la diode émettrice de lumière (60) est choisie de telle sorte que cette dernière fonctionne dans la plage linéaire de sa caractéristique courant-tension.

7. Dispositif suivant la revendication 6, du type dans lequel l'étage de sortie du balayage horizontal (47) est alimenté par le second montage redresseur (41, 42) par l'intermédiaire de l'enroulement primaire (44) d'un transformateur de sortie du balayage horizontal (45), caractérisé en ce que le signal de synchronisation est prélevé à la jonction de l'enroulement primaire (44) avec l'étage de sortie (47) fournissant des impulsions de retour-ligne de polarité positive séparées entre elles par des plateaux de tension de niveau sensiblement nulle, et transmis par l'intermédiaire d'un condensateur (67) éliminant la composante continue de ce signal et d'une résistance (68) en série, à la sortie (58) du diviseur résistif (55, 57, 56) fournissant la tension de régulation, la valeur de la résistance (68) étant choisie de telle sorte que l'amplitude des plateaux négatifs du signal de synchronisation, sans composante continue, à sa jonction avec la sortie (58) du diviseur soit inférieure à la différence entre la tension de régulation et la tension Zener de la diode (62).

8. Dispositif suivant l'une des revendications 3 à 7, caractérisé en ce que le phototransistor (63) est monté en collecteur-commun, son émetteur étant réuni à la masse chaude (9) galvaniquement couplée au réseau, au moyen d'une résistance (64) et couplé, d'une part, par un filtre passe-bas passif ou actif, à l'entrée de régulation du circuit de régulation et de commande (20) et, d'autre part, par un filtre passe-haut ou différentiateur (69, 70), à l'entrée de synchronisation de ce dernier.

9. Dispositif suivant l'une des revendications 3 à 8, caractérisé en ce que l'entrée de régulation reçoit, en outre, au moyen d'un dipôle composé d'un condensateur (80) et d'une résistance (81) en série, relié par l'une de ses bornes à la borne de sortie positive (6) du montage redresseur (1, 7), une fraction de la tension d'ondulation résiduelle, afin d'en effectuer une compensation supplémentaire.

10. Appareil de visualisation ou d'affichage d'informations sur l'écran luminescent d'un tube à rayons cathodiques à déviation électromagnétique, comprenant des circuits de balayage vertical et horizontal dont le dernier fonctionne à une fréquence plus élevée que le premier, caractérisé en ce qu'il comporte un dispositif d'alimentation à découpage selon l'une des revendications 2 à 7, dans lequel les informations de régulation et de synchronisation sont transmis ensemble de manière isolée, au moyen d'un photocoupleur (61) unique.

**Claims**

1. Controlled switching power supply whose outputs furnishing supply direct voltages are galvanically separated from the mains which feeds them by way of a first rectifier circuit (1-7) by means of an isolation and supply transformer (12) whose primary winding (11) is connected in series with the collector-emitter path of a switching transistor (13) between the output terminals (6, 8) of the latter, the base of the switching transistor (13) being coupled to the output of a control and pilot circuit (20) which supplies thereto rectangular signals with cyclic ratio variable as a function of a control information supplied by one of the isolated outputs (43, 38) and transmitted via an optocoupler (61) to the control input of the control and pilot circuit (20), to the synchronization input of which is likewise applied in galvanically isolated manner a synchronization information originating from a periodically functioning circuit such as a horizontal deflection circuit fed by one of the isolated outputs of the device, characterized in that the synchronization information is superimposed without dc component on the control information in front of the optocoupler (61) and in that it is separated therebehind from the latter by means of a high-pass filter (69, 70) and a low-pass filter (65, 66, 251, 73, 74) which respectively feed the synchronization input and the control input of the control and pilot circuit (20).

2. Device according to claim 1, characterized in that apart from the control information the control input also receives a predetermined fraction of the residual waveform present between the output terminals (6, 8) of the first rectifier circuit (1-7).

3. Controlled switching power supply with isolation of its outputs from the ac mains for an apparatus for visualization or display of information on the luminescent screen of a cathode-ray tube with electromagnetic deflection, comprising a switching circuit (10) consisting of the primary winding (11) of an isolating transformer (12) and the collector-emitter path of a switching transistor (13) connected in series between the output terminals (6, 8) of a first rectifier circuit (1-7) fed by the mains, the transistor (13) being controlled at its base by means of a control and pilot circuit (20) comprising a control input which receives a voltage whose variation assumes that of the cyclic ratio of the signals controlling the alternating saturation and blocking of the switching transistor (13) and a synchronization input fed by pulses taken from the horizontal deflection circuit (52, 47) for synchronizing the autonomous oscillator of the control and pilot circuit (20) with said deflection, the control voltage being taken from between the output terminals (43, 38) of a further rectifier circuit (41, 42) fed by a secondary winding (37) of the transformer (12), one of the terminals of which is connected to a ground (38) isolated from the mains, and transmitted by way of an optocoupler (61) to the control input, characterized in that said synchronization pulses after passage through a high-pass filter or a capacitor (67) are superimposed on the control voltage before the optocoupler (61) and in that the signal available at the output of the latter is separated into two components respectively with the aid of a second high-pass filter (69, 70) for application to the synchronization input and with the aid of a low-pass filter (66, 73) for application to the control input of the control and pilot circuit (20).

4. Device according to claim 3, characterized in that the low-pass filter is combined with an operational amplifier referred to as error amplifier (251), the inverting input (—) of which coupled to the output of the optocoupler (61) is connected to its output by way of a capacitor (73) so as to form an active filter of low-pass type.

5. Device according to one of claims 3 and 4, characterized in that the second high-pass filter is formed by a simple passive differential circuit comprising a capacitor (69) and a resistor (70).

6. Device according to one of claims 3 to 5, of the type in which the control voltage furnished by a resistive divider (55, 56, 57) connected between the output terminals (43, 38) of the second rectifier circuit (41, 42) is applied to a circuit comprising a resistor (59), a light-emitting diode (60) constituting the input element of the optocoupler (61), and a Zener diode (62) connected in series, characterized in that the difference between the mean value of the control voltage and the Zener voltage of the diode (62) which polarizes the light-emitting diode (60) is chosen in such a manner that the latter functions in the linear zone of its current-voltage characteristic.

7. Device according to claim 6 of the type in which the output stage of the horizontal deflection (47) is fed by the second rectifier circuit (41, 42) by way of the primary winding (44) of an output transformer of the horizontal deflection (45), characterized in that the synchronization signal is taken from the connection point of the primary winding (44) with the output stage (47) furnishing line flyback pulses of positive polarity separated from each other by voltage steps of substantially zero-level, and transmitted by way of a capacitor (67) eliminating the dc component of said signal and a series resistor (68) to the output (58) of the resistive divider (55, 57, 56) furnishing the control voltage, the value of the resistor (68) being chosen such that the amplitude of the negative steps of the synchronization signal without dc component at the connection point thereof with the output (58) of the divider is less than the difference between the control voltage and the Zener voltage of the diode (62).

8. Device according to any one of claims 3 to 7, characterized in that the phototransistor (63) is in common collector connection, its emitter being connected to the hot ground (9) galvanically coupled to the mains by way of a resistor (64) and coupled on the one hand by a passive or active low-pass filter to the control input of the control and pilot circuit (20) and on the other hand via a high-pass filter or differentiator (69, 70) to the synchronization input of said circuit.

9. Device according to one of claims 3 to 8, characterized in that the control input further receives by way of a dipole formed by a capacitor (80) and a resistor (81) in series connected via one of its terminals to the positive output terminal (6) of the rectifier circuit (1, 7) a fraction of the residual waveform in order to effect a supplementary compensation.

10. Apparatus for visualization or display of information on the luminescent screen of a cathode-ray tube with electromagnetic deflection comprising vertical and horizontal deflection circuits, of which the latter operates at a function higher than the former, characterized in that it comprises a switching power supply according to one of claims 2 to 7 in which the control and synchronization informations are transmitted together in isolated manner by means of a single optocoupler (61).

**Patentansprüche**

1. Stabilisierte Schalt-Stromversorgungsvorrichtung, deren Versorgungsgleichspannungen liefernde Ausgänge galvanisch vom Netz getrennt sind, woraus sie über eine erste Gleichrichterschaltung (1-7) mittels eines Trenn- und Versorgungstransformators (12) gespeist wird, dessen Primärwicklung (11) in Reihe mit der Kollektor-Emitter-Strecke eines Schalttransistors (13) zwischen den Ausgangsanschlüssen (6, 8) desselben geschaltet ist, wobei die Basis des Schalttransistors (13) an den Ausgang einer Regel- und Steuerschaltung (20) angeschlossen ist, welche Rechtecksignale mit einem Zyklusverhältnis abgibt, das in Abhängigkeit von einer Regelinformation variabel ist, welche von einem der abgetrennten Ausgänge (43, 38) geliefert wird und über einen Optokoppler (61) an den Regeleingang der Regel- und Steuerschaltung (20) geführt wird, an deren Synchronisationseingang ferner eine Synchronisationsinformation galvanisch getrennt angelegt wird, welche aus einer periodisch arbeitenden Schaltung stammt, wie aus einer Horizontalablenkschaltung, die durch einen der getrennten Ausgänge der Vorrichtung gespeist wird, dadurch gekennzeichnet, daß die Synchronisationsinformation ohne Gleichkomponente der Regelinformation vor dem Optokoppler (61) überlagert wird und daß sie hinter diesem von ihm mittels eines Hochpaßfilters (69, 70) und eines Tiefpaßfilters (65, 66, 251, 73, 74) abgetrennt wird, welches den Synchronisationseingang bzw. den Regeleingang der Regel- und Steuerschaltung (20) speist.

2. Vorrichtung nach Anspruch 1, dadurch gekennzeichnet, daß der Regeleingang außer der Regelinformation einen vorbestimmten Bruchteil der Restwellspannung empfängt, welche zwischen den Ausgangsanschlüssen (6, 8) der ersten Gleichrichterschaltung (1, 7) vorhanden ist.

3. Stabilisierte Schalt-Stromversorgungsvorrichtung, deren Ausgänge vom Wechselstromnetz isoliert sind, für ein Gerät zur Sichtdarstellung oder Anzeige von Informationen auf dem Leuchtschirm einer Kathodenstrahlröhre mit elektromagnetischer Ablenkung, versehen mit einer Zerhackerschaltung (10), die aus der Primärwicklung (11) eines Trenntransformators (12) und der Kollektor-Emitter-Strecke eines Zerhackertransistors (13) gebildet ist, welche in Reihe zwischen die Ausgangsanschlüsse (6, 8) einer ersten Gleichrichterschaltung (1, 7) geschaltet sind, die durch das Netz gespeist wird, wobei der Transistor (13) an seiner Basis über eine Regel- und Steuerschaltung (20) gesteuert wird, welche einen Regeleingang aufweist, der eine Spannung empfängt, deren Änderung die des zyklischen Verhältnisses der Signale annimmt, welche die abwechselnde Sättigung und Sperrung des Zerhackertransistors (13) steuern, und einen Synchronisationseingang aufweist, welcher durch Impulse gespeist wird, die an der Horizontalablenkschaltung (52, 47) abgegriffen werden, um den autonomen Oszillator der Regel- und Steuerschaltung (20) mit dieser Ablenkung zu synchronisieren, wobei die Regelspannung zwischen den Ausgangsanschlüssen (43, 38) einer weiteren Gleichrichterschaltung (41, 42) abgegriffen wird, die durch eine Sekundärwicklung (37) des Transformators (12) gespeist wird, wovon einer der Anschlüsse mit einer Masse (38) verbunden ist, die von Netz isoliert ist, und mittels eines Optokopplers (61) an den Regeleingang übertragen wird, dadurch gekennzeichnet, daß die Synchronisationsimpulse nach Durchlaufen eines Hochpaßfilters oder eines Kondensators (67) der Regelspannung vor dem Optokoppler (61) überlagert werden und daß das am Ausgang desselben verfügbare Signal in zwei Komponenten getrennt wird, nämlich mittels eines zweiten Hochpaßfilters (69, 70), um an den Synchronisationseingang angelegt zu werden, bzw. mittels eines Tiefpaßfilters (66, 73), um an den Regeleingang der Regel- und Steuerschaltung (20) angelegt zu werden.

4. Vorrichtung nach Anspruch 3, dadurch gekennzeichnet, daß das Tiefpaßfilter mit einem Operationsverstärker, der als Fehlerverstärker (251) bezeichnet wird, kombiniert ist, dessen invertierender Eingang (—), der an den Ausgang des Optokopplers (61) angekoppelt ist, mit seinem Ausgang über einen Kondensator (73) verbunden ist, um ein aktives Filter vom Tiefpaßtyp zu bilden.

5. Vorrichtung nach einem der Ansprüche 3 und 4, dadurch gekennzeichnet, daß das zweite Hochpaßfilter durch eine einfache passive Differenzierschaltung gebildet ist, die einen Kondensator (69) und einen Widerstand (70) enthält.

6. Vorrichtung nach einem der Ansprüche 3 bis 5, vom Typ, bei welcher die von einem resistiven Teiler (55, 56, 57), der zwischen die Ausgangsanschlüsse (43, 38) der zweiten Gleichrichterschaltung (41, 42) geschaltet ist, gelieferte Regelspannung an eine Schaltung angelegt ist, welche einen Widerstand (59), eine Leuchtdiode (60), die das Eingangselement des Optokopplers (61) bildet, und eine Zenerdiode (62) umfaßt, welche in Reihe geschaltet sind, dadurch gekennzeichnet, daß die Differenz zwischen dem Mittelwert der Regelspannung und der Zenerspannung der Diode (62), welche die Leuchtdiode (60) polarisiert, derart gewählt ist, daß letztere in dem linearen Bereich ihrer Strom/Spannungs-Charakteristik arbeitet.

7. Vorrichtung nach Anspruch 6, vom Typ, bei welcher die Ausgangsstufe der Horizontalablenkung (47) durch die zweite Gleichrichterschaltung (41, 42) über die Primärwicklung (44) eines Ausgangstransformators der Horizontalablenkung (45) gespeist wird, dadurch gekennzeichnet, daß das Synchronisationssignal am Verbindungspunkt zwischen der Primärwicklung (44) und der Ausgangsstufe (47) abgegriffen wird, welche die Zeilenrücklaufimpulse von positiver Polarität liefert, die voneinander durch Spannungsstufen mit einem Pegel von etwa Null getrennt sind und über einen die Gleichkomponente dieses Signals eliminierenden Kondensator (67) und einen Reihenwiderstand (68) zum Ausgang (58) des resistiven Teilers (55, 57, 56), welcher die Regelspannung liefert, übertragen werden, wobei der Wert des Widerstandes (68) derart gewählt ist, daß die Amplitude der negativen Stufen des Synchronisationssignals ohne Gleichkomponente an seinem Verbindungspunkt mit dem Ausgang (58) des Teilers kleiner als die Differenz zwischen der Regelspannung und der Zenerspannung der Diode (62) ist.

8. Vorrichtung nach einem der Ansprüche 3 bis 7, dadurch gekennzeichnet, daß der Fototransistor (63) in Kollektorschaltung geschaltet ist, wobei sein Emitter über einen Widerstand (64) mit der heißen Masse (9) verbunden ist, welche galvanisch an das Netz gekoppelt ist, und einerseits über ein passives oder aktives Tiefpaßfilter an den Regeleingang der Regel- und Steuerschaltung (20) angekoppelt ist und andererseits über ein Hochpaßfilter oder einen Differenzierer (69, 70) an den Synchronisationseingang derselben angekoppelt ist.

9. Vorrichtung nach einem der Ansprüche 3 bis 8, dadurch gekennzeichnet, daß der Regeleingang ferner über einen Zweipol, welcher aus einem Kondensator (80) und einem Reihenwiderstand (81) besteht sowie mit seinem einen Anschluß an den positiven Ausgangsanschluß (6) der Gleichrichterschaltung (1, 7) angeschlossen ist, einen Bruchteil der Restwellspannung empfängt, um eine zusätzliche Kompensation derselben durchzuführen.

10. Gerät zur Sichtdarstellung oder Anzeige von Informationen auf dem Leuchtschirm einer Kathodenstrahlröhre mit elektromagnetischer Ablenkung, versehen mit Vertikal- und Horizontal-Ablenkschaltungen, von denen letztere mit einer höheren Frequenz als erstere arbeitet, dadurch gekennzeichnet, daß es eine Schalt-Stromversorgungsvorrichtung nach einem der Ansprüche 2 bis 7 umfaßt, worin die Regel- und Synchronisationsinformationen gemeinsam und auf isolierte Weise mittels eines einzigen Optokopplers (61) übertragen werden.

0 083 533